# EUROPEAN PATENT APPLICATION

(11) **EP 2 262 079 A1**
(43) Date of publication of application: **15.12.2010**
(21) Application number: 09162141.7
(22) Date of filing: 08.06.2009
(51) Int. Cl.: H02K 3/14, H02K 3/42

(54) **Roebel bar with transposed end windings**

(71) Applicant: Alstom Technology Ltd, 5400 Baden (CH)
(72) Inventor: Haldemann, Johann, 5242 Birr (CH); Wiemer, Dirk, 68163 Mannheim (DE)

(57) **Abstract**

The stator bar (1) comprises four stacks of strands (5) defining an active part (2) wherein the strands (5) are transposed by successive crossovers from one stack position to another, and two end windings (3) extending from the two ends of the active part (2). The strands (5) of the active part (2) are transposed by 360° or 540° such that all strands (5) occupy all positions in the bar for substantially equal distances. In addition, the end windings (3) are transposed by successive crossovers from one stack position to another by an angle between 60-180°.

## Description

### TECHNICAL FIELD

The present invention relates to a stator bar.

In particular the present invention refers to stator bars of large ac electric generators.

### BACKGROUND OF THE INVENTION

Large electric generators are known to comprise a stator (encircling a rotatable rotor) made of a laminated core provided with slots each housing one or more stator bars.

Stator bars have a straight or active part to be housed in the slots of the stator core, and two bent end-windings, to be hold outside of the slots and arranged to be connected to the end-windings of other stator bars to define the windings.

Typically, the stator bars comprise two stacks of conductive strands insulated from one another and defining both the active part and the two end windings.

The strands are transposed by successive crossovers from one stack position to another both in the active part and the end windings, such that during operation the leakage flux (i.e. the electromagnetic field surrounding each stator bar and inducing voltages within the strands that cause eddy currents) are compensated and eddy currents circulating in the stator bars are at a minimum level.

The strands are covered by a main insulation and this latter is covered by a conductive or semi-conductive corona protection layer.

Nevertheless, large and very large electric generators require stator bars having large strands in order to carry the high load currents generated in these machines during operation.

Large strands cause the eddy currents generated in the strands and, thus, the thermal load, to be too high to be tolerated.

In order to reduce these eddy currents, stator bars are manufactured having four stacks of strands.

In particular, US3647932 discloses stator bars having four stacks of strands that are transposed at the active part, but are not transposed (i.e. they extend parallel to each other) in the end windings.

In particular, US3647932 teaches of reversing the stack positions from one end of the active part to the other, in order to balance the leakage flux on the end windings, such that the stator bars may be connected together at their ends without causing excessive eddy currents.

Nevertheless, as the leakage flux outside of the slots is not void, during operation the end windings (that rotate because they are connected to the rotor) sweep this leakage flux and generate eddy currents that, for large or very large generators, could be large.

### SUMMARY OF THE INVENTION

The technical aim of the present invention is therefore to provide a stator bar by which the said problems of the known art are eliminated.

Within the scope of this technical aim, an object of the invention is to provide a stator bar to be mounted in an electric machine such as an electric generator (in particular a large or very large electric generator) that lets the eddy currents generated during operation be very limited.

In particular, the stator bar according to the invention lets the eddy currents caused by the leakage flux outside of the slots and intercepted by the end windings to be kept to a minimum.

The technical aim, together with these and further objects, are attained according to the invention by providing a stator bar in accordance with the accompanying claims.

### BRIEF DESCRIPTION OF THE DRAWINGS

Further characteristics and advantages of the invention will be more apparent from the description of a preferred but non-exclusive embodiment of the stator bar according to the invention, illustrated by way of nonlimiting example in the accompanying drawings, in which:

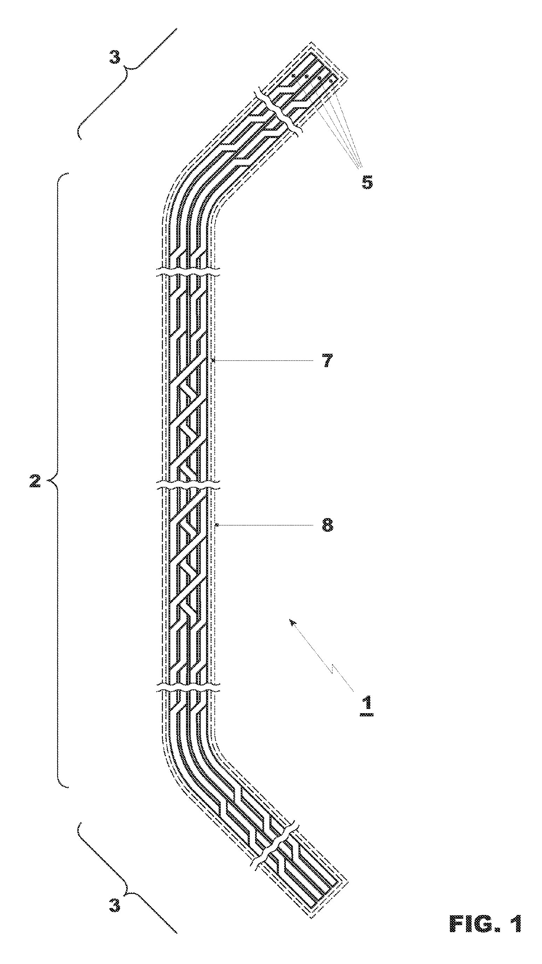

Figure 1 is a sketch of a stator bar according to the invention;
Figures 2 shows a first transposition diagram of a stator bar according to the invention;
Figures 3A through 3F show diagrammatic transverse cross sections through lines A, B, C, D, E, F of figure 2 of the stator bar in an embodiment of the invention;
Figures 4A through 4F show diagrammatic transverse cross sections through lines A, B, C, D, E, F of figure 2 in the stator bar in a different embodiment of the invention;
Figures 5 shows a second transposition diagram of a stator bar according to the invention;
Figures 6A through 6F show diagrammatic transverse cross sections through lines A, B, C, D, E, F of figure 5 of the stator bar in an embodiment of the invention;
Figures 7A through 7F show diagrammatic transverse cross sections through lines A, B, C, D, E, F of figure 5 of the stator bar in a different embodiment of the invention.

### DETAILED DESCRIPTION OF THE INVENTION

With reference to the figures, these show a stator bar overall indicated by the reference 1.

The stator bar 1 comprises an active part 2 arranged to be housed in a slot of a core of an electric machine such as an electric generator, and two end windings 3 that are bent with respect to the active part 2 and extend at the two opposite ends of the active part 2.

The stator bar 1 comprises four stacks of strands 5 usually made of copper; the enclosed figures show six strands for each stack, it is anyhow clear that the number of strands in each stack may also be different (usually greater) according to the particular needs.

The strands 5 are insulated from one another and are transposed by successive crossovers from one stack position to another both at the active part 2 and the end windings 3.

Moreover, a main insulation layer 7 (usually made of a mica tape) is wrapped around the transposed strands 5 and a conductive or semi-conductive corona protection layer 8 is wrapped around the main insulation layer 7. Usually this structure is impregnated with a resin.

At the active part 2, the strands are transposed by substantially 360° or 540° such that all strands occupy all positions in the bar for substantially equal distances (for sake of simplicity, usually transposition is described by specifying the degree of rotation of a strand along a conductor, even if actually it shifts positions in a rectilinear manner).

Moreover, the four stacks of strands 5 are transposed at the end windings 2 by successive crossovers from one stack position to another by an angle between substantially 60-180°.

Advantageously the two end windings are transposed by the same angle.

Preferably the transposition angle at the end windings is substantially 90° and more preferably substantially 180°.

In fact, in a stator bar 1 having four stacks of strands 5 that are transposed at the active part by 360° or 540° such that all strands occupy all positions in the bar for substantially equal distances and by an angle between 60°-180° at the end windings (preferably 90° and more preferably 180°), during operation the voltages induced from the leakage flux intercepted by the end windings are balanced such that no or very low eddy currents circulate within it.

The strands 5 have the same transposition orientation or they have opposite transposition orientation at the end windings.

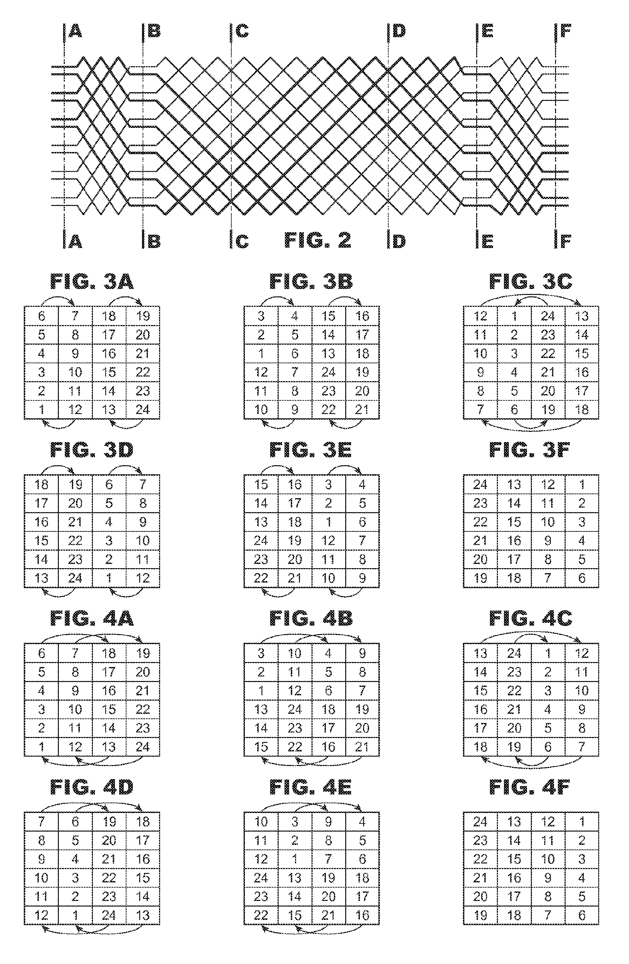

Figure 2 shows a transposition diagram of a stator bar with 90° transposition at the end windings 3 and 360° transposition at the active part 2.

In particular, line A is at the end of a first end winding, line B is between the first end winding and the active part, line C is ¼ of the length of the active part, line D is ¼ of the length of the active part (thus the two side portions of the active part have a length being ¼ of the length of the active part, and the central portion of the active part has a length being ½ of the length of the active part), line E is between the active part and the second end winding, and line F is at the end of the second end winding.

From figure 2 it is apparent that the crossover distance of the strands 5 is constant through the whole active part and it is also constant through the whole of each end windings.

Figures 3A through 3F show six cross sections through a first stator bar in the position indicated by the lines A through F in figure 2. The strands in this embodiment alternatively raise and fall.

Figures 4A through 4F show six cross sections through a second stator bar in the position indicated by the lines A through F in figure 2. In this embodiment the strands 5 raise and fall in parallel.

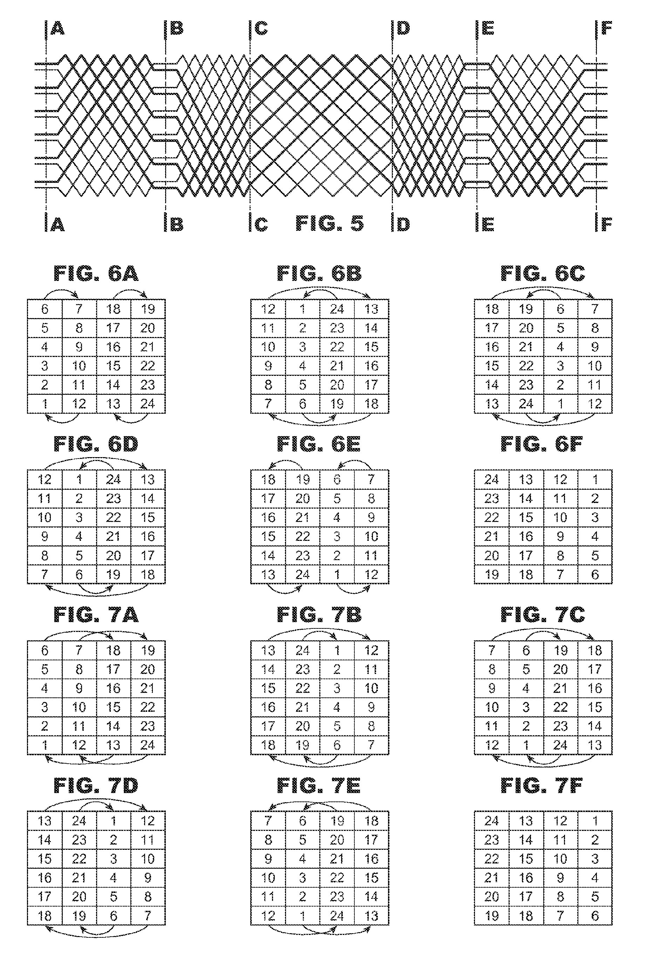

Figure 5 shows a transposition diagram of a stator bar with 180° transposition at the end windings 3 and 540° transposition at the active part 2.

In particular line A is at the end of a first end winding, line B is between the first end winding and the active part, line C is ¼ of the length of the active part, line D is ¾ of the length of the active part (thus the two side portions of the active part have a length being ¼ of the length of the active part, and the central portion of the active part has a length being ½ of the length of the active part), line E is between the active part and the second end winding, and line F is at the end of the second end winding.

From figure 5 it is apparent that the crossover distance of the strands 5 is not constant through the active part; in particular the crossover distance has a first value between lines B-C and D-E and a second value between lines C-D, with the second value being greater than the first value.

Preferably the second value is greater than the first value by a factor of 2.

Moreover, the crossover distance is constant through the end windings.

In particular figures 6A through 6F show six cross sections through a third stator bar in the position indicated by lines A through F of figure 5. In this embodiment the strands 5 alternatively raise and fall.

Figures 7A through 7F show six cross sections through a second stator bar in the position indicated by lines A through F in figure 5. In this embodiment the strands 5 raise and fall in parallel.

In practice the materials used and the dimensions can be chosen at will according to requirements and to the state of the art.

### REFERENCE NUMBERS

1 stator bar
2 active part
3 end winding
5 strands of a stator bar
7 main insulation
8 corona protection layer

## Claims

1. Stator bar (1) comprising four stacks of strands (5) defining an active part (2) wherein said strands (5) are transposed by successive crossovers from one stack position to another, and two end windings (3) extending from the two ends of the active part (2), said strands (5) of the active part (2) being transposed by substantially 360° or 540° such that all strands (5) occupy all positions in the bar for substantially equal distances, and said end windings (3) being transposed by successive crossovers from one stack position to another by an angle between substantially 60-180°.

2. Stator bar (1) as claimed in claim 1, **characterised in that** the end windings (3) are transposed by the same angle.

3. Stator bar (1) as claimed in claim 1, **characterised in that** the end windings (3) are transposed by substantially 180°.

4. Stator bar (1) as claimed in claim 1, **characterised in that** the end windings (3) are transposed by substantially 90°.

5. Stator bar (1) as claimed in claim 1, **characterised in that** the strands (5) have the same transposition orientation at the end windings.

6. Stator bar (1) as claimed in claim 1, **characterised in that** the strands (5) have opposite transposition orientation at the end windings.
